# EUROPEAN PATENT SPECIFICATION

(11) **EP 0 417 724 B1**
(45) Date of publication and mention of the grant of the patent: **15.05.1996**
(21) Application number: 90117466.4
(22) Date of filing: 11.09.1990
(51) Int. Cl.: C08F 12/04

(54) **Coordination polymerization of styrene monomer**
Koordinationspolymerisation von Styrolmonomer
Polymérisation par un catalyseur de coordination de styrène

(30) Priority: 14.09.1989 US 407168
(43) Date of publication of application: 20.03.1991
(73) Proprietor: THE DOW CHEMICAL COMPANY, Midland, Michigan 48640 (US)
(72) Inventor: Malanga, Michael T., Midland, Michigan 48640 (US)
(74) Representative: Türk, Gille, Hrabal, Leifert

(56) References cited:
- EP-A- 0 091 101
- EP-A- 0 224 097
- EP-A- 0 410 361

## Description

The present invention relates to an improved process for preparing styrene polymers by means of a Ziegler-Natta, Kaminsky-Sinn or other polymerization process catalyzed by a coordination polymerization catalyst. More particularly the present invention relates to such an improved process resulting in increased catalyst efficiency and lifetime.

The polymerization of styrene monomer to prepare useful polymers by means of a coordination polymerization has been previously disclosed in the art.

In US-A-4 680 353 the preparation of styrene polymers having a high degree of syndiotactic configuration utilizing such a catalyst is disclosed.

In EP-A-0 410 361 which belongs to the prior art according to Article 54(3) EPC there is described a process for producing styrene polymers having a high degree of syndiotactic configuration by polymerizing a purified styrene monomer containing a phenylacetylene compound in an amount of 50 ppm or less in the presence of a catalyst composed of (A) aluminoxane and (B) a transition metal compound.

In the practice of such processes the catalyst is normally exhausted during the polymerization and must be replenished. Because the catalyst is relatively expensive, commercially viable processes require improved yields of polymer. Thus is would be desirable to provide a process for polymerization of styrene monomer having improved catalyst efficiency and lifetime.

The present inventor now has found that phenylacetylene, which is present in the styrene monomer available through many commercial sources, adversely affects typical coordination polymerization catalysts to reduce catalyst lifetime and efficiency. This is generally considered a surprising discovery in as much as phenylacetylene is known to be polymerizable by typical Ziegler-Natta or other coordination polymerization catalysts and thus would not be suspected of adversely affecting the present process.

Accordingly, the object of the present invention is to provide a process for polymerization of styrene monomer having improved catalyst efficiency and lifetime.

A subject-matter of the present invention is a process for preparing styrene polymers by means of a coordination type polymerization by contacting a monomer stream comprising styrene with a coordination catalyst under polymerization conditions, so as to cause at least partial polymerization of styrene, which is characterized by contacting a monomer stream comprising styrene and contaminating amounts of phenylacetylene with a hydrogenating agent under hydrogenation conditions in the presence of a noble metal catalyst or reduced copper catalyst at a temperature from 20°C for 45°C such that substantially all the phenylacetylene is hydrogenated so that the phenylacetylene content of said monomer stream is 0.9 ppm or less without substantial hydrogenation of styrene; and then contacting the monomer stream with the coordination catalyst.

Preferred embodiments of the above process of the present invention are described in subclaims 2 to 5.

By careful selection of the hydrogenation conditions, substantially complete removal of phenylacetylene without substantial hydrogenation of styrene monomer can be obtained. As a result of this procedure substantial increase in catalyst lifetime and improved catalyst efficiency is obtained.

Polymerization processes wherein the improvement according to the present invention is applicable include the previously described known procedure for preparing syndiotactic polystyrene of US-A-4 680 353.

In addition to such processes for preparing syndiotactic polystyrene, the present invention may be utilized in combination with a mixture of styrene monomer and one or more olefins other than styrene, especially ethylene or propylene, to prepare substantially linear copolymers containing random distributions of styrene and said olefin remnants.

Suitable catalysts for such process include transition metal derivatives of substituted monocyclopentadiene or saturated derivatives thereof also containing a covalent bond between the metal and said substituent. Specific examples include the combination of (tert-butylamido)(dimethyl) (tetramethyl-η⁵-cyclopentadienyl)silane zirconium or titanium dichloride or similar metal compound with methylaluminoxane and cationic salt derivatives of such metal complexes containing non-coordinating compatible anions such as perfluorinated tetraaryl borate anions, expecially perfluorotetraphenyl borate.

In addition to olefins such as ethylene, propylene and 1-methylbutene, the polymerization of the present invention may additionally include diolefins such as butadiene or isoprene, as well as additional vinylaromatic monomers such as alkyl or halo ring-substituted styrene derivatives. Coordination polymerization catalysts for use according to the present invention preferably comprise:
1) a active catalyst species which is a metal of Group in of the Periodic Table of the Elements, and
2) a relatively large (bulky) associated group, capable of stabilizing the active catalygt species (the Group 4 containing species), said group being sufficiently labile to be displaced by the polymerizable monomer.

More preferred catalysts for use according to the present invention comprise a transition metal compound containing at least one metal-O; metal-C; metal-N; metal-P; metal-S or metal-halogen bond and an organoaluminum compound containing at least one oxygen atom bound to the aluminum atom or located between two aluminum atoms. Highly preferred catalysts for use in the preparation of styrene polymers having a high degree of syndiotacticity are zirconium or titanium monocyclopentadienyl complexes, in particular monocyclopentadienyl titanium triphenoxides or trialkoxides having from 1 to 10 carbons in the alkyl group, in combination with methylaluminoxane. The use of such compositions in the preparation of styrene polymers is disclosed in United States Patent Nos. 4,808,680, 4,774,301, WO 88-10275 and JP 89-501487.

Such catalysts may be employed in either a supported or an unsupported manner. Suitable supports include silica and alumina. In a preferred embodiment the amount of transition metal compound to aluminum in the catalyst may range from .001 to 1, preferably from .01 to .1. The catalyst is employed in the polymerization in an amount from 10⁻⁹ to 10⁻¹ moles per mole of styrene.

The presence of phenylacetylene in styrene monomer used according to the present invention may be detected by standard techniques. One suitable technique is gas chromatography (GPC). Styrene monomer may be obtained having levels of phenylacetylene as high as 150 parts per million or higher. According to the present technique it is possible to utilize such styrene monomer containing high levels of phenylacetylene in a Ziegler-Natta polymerization by the technique herein disclosed.

The styrene monomer is contacted with a hydrogenating agent, preferably hydrogen under hydrogenation conditions which are relatively mild so as to cause phenylacetylene hydrogenation but not to cause substantial hydrogenation of styrene. Suitably the hydrogenation may be conducted in the presence of a noble metal catalyst at moderate temperatures. Preferred noble metals include platinum or palladium optionally supported on an inert support such as aluminum, alumina or silica. Reduced copper catalysts may also be employed. Such catalysts particularly include those containing reduced copper on a support of γ-alumina which contains 50 percent by weight or less of α-alumina and less than 0.15 weight percent each of silicon as SiO₂ and sodium as Na₂O, and less that 0.01 percent iron as Fe₂O₃, and has a surface area of between about 68 and 350 m/g and wherein between about 98 and about 40 percent of the pores have a pore diameter between about is 4 nm and 12 nm and not more than 25 percent nor less than 2 percent have a pore diameter between 100 and 1,000 nm. These catalysts are more fully disclosed in United States Patent No. 4,822,936. The phenylacetylene content of the styrene monomer is reduced to a level of 0.9 ppm or lower prior to polymerization.

The temperatures for the hydrogenation are from 20°C to 45°C, preferably from 22°C to 30°C. After substantial hydrogenation of the phenylacetylene has occurred the monomer stream is contacted with the coordination polymerization catalyst under polymerization conditions. Utilizing the present technique, improved catalyst efficiencies, on the order of 50 to 1000 percent, are obtained compared to the use of styrene monomer which has not been treated to remove phenylacetylene. Catalyst efficiency is measured by the amount of polymer which results per weight catalyst.

Having described the invention, the following examples are provided to further illustrate the invention. Unless stated to the contrary, parts and percentages are based on weight.

### Example 1

Styrene monomer was purified to remove water and other oxygen containing species by contacting with an activated alumina bed. The purified monomer was then hydrogenated using hydrogen gas to obtain a dissolved hydrogen level of about 1000 parts per million. The mixture was passed through a fixed bed of palladium on aluminum at room temperature. The phenylacetylene content after treatment in this manner was determined to be less than 1 part per million (the limit of detection by the gas chromatography instrument employed).

Aliquots of purified styrene monomer were then treated with known amounts of phenylacetylene to provide varying levels of contamination. The actual phenylacetylene level was then measured by gas chromatography. The samples were then subjected to a polymerization procedure in which 75 microliters of a 1.01 molar triisobutylaluminum/toluene solution, 75 microliters of a 1.0 molar methylaluminoxane/toluene solution and 38 microliters of a 0.01 molar cyclopentadienyltitanium tris-isopropoxide/toluene solution were added to the monomer. The combined solution was exposed to polymerization conditions (inert atmosphere, temperature 70°C) for 1 hour and the resulting polymer, which had a high degree of syndiotactic structure, was dried to removed unpolymerized monomer. The percent conversion after 1 hour and efficiency in grams of polymer per grams of methylaluminoxane were calculated. Results are contained in Table 1.

**Table 1**

| Run | Phenylacetylene (ppm) | % Conversion | Efficiency (g/g) |
|---|---|---|---|
| 1 | <1 | 37.7 | 788 |
| 2 | 29 | 23.8 | 499 |
| 3 | 54 | 19.8 | 413 |
| 4 | 80 | 10.8 | 226 |
| 5 | 109 | 7.8 | 165 |
| 6 | 160 | 5.3 | 110 |
| 7 | 257 | 1.6 | 34 |

By reference to Table 1 it may be seen that improved conversions and efficiency of catalyst utilization is obtained by the polymerization of styrene monomer containing reduced amounts of phenylacetylene. Overall yield of polymer based on monomer is substantially unaffected by exposing the styrene monomer to hydrogenation conditions designed to obtain substantially complete hydrogenation of phenylacetylene while substantially avoiding hydrogenation of styrene monomer.

## Claims

1. A process for preparing styrene polymers by means of a coordination type polymerization by contacting a monomer stream comprising styrene with a coordination catalyst under polymerization conditions, so as to cause at least partial polymerization of styrene, characterized by contacting a monomer stream comprising styrene and contaminating amounts of phenylacetylene with a hydrogenating agent under hydrogenation conditions in the presence of a noble metal catalyst or reduced copper catalyst at a temperature from 20°C to 45°C such that substantially all the phenylacetylene is hydrogenated so that the phenylacetylene content of said monomer stream is 0.9 ppm or less without substantial hydrogenation of styrene; and then contacting the monomer stream with the coordination catalyst.

2. The process according to claim 1 wherein the hydrogenating agent is hydrogen gas.

3. The process according to any of claims 1 or 2 wherein the temperature is from 22°C to 30°C.

4. The process according to any of claims 1 to 3 wherein a mixture of styrene monomer and one or more olefin monomers other than styrene is polymerized.

5. The process according to claim 4 wherein a mixture of ethylene and styrene is polymerized.

## Patentansprüche

1. Ein Verfahren zur Herstellung von Styrol-Monomeren durch eine Koordinations-Typ-Polymerisation durch Inkontaktbringen eines Styrol umfassenden Monomerstroms mit einem Koordinations-Katalysator unter Polymerisationsbedingungen, so daß mindestens partielle Polymerisation von Styrol bewirkt wird, charakterisiert durch Inkontaktbringen eines Monomerstroms, der Styrol und kontaminierende Mengen Phenylacetylen enthält, mit einem Hydrierungsmittel unter Hydrierungsbedingungen in Gegenwart eines Edelmetallkatalysators oder reduzierten Kupferkatalysators bei einer Temperatur von 20°C bis 45°C, so daß im wesentlichen alles Phenylacetylen hydriert wird, so daß der Phenylacetylen-Gehalt des Monomerstroms 0,9 ppm oder weniger beträgt, ohne wesentliche Hydrierung von Styrol; und anschließendes Inkontaktbringen des Monomerstroms mit dem Koordinationskatalysator.

2. Das Verfahren entsprechend Anspruch 1, wobei das Hydrierungsmittel Wasserstoffgas ist.

3. Das Verfahren entsprechend einem der Ansprüche 1 oder 2, wobei die Temperatur von 22°C bis 30°C beträgt.

4. Das Verfahren entsprechend einem der Ansprüche 1 bis 3, wobei eine Mischung aus Styrol-Monomer und einem oder mehr von Styrol verschiedenen Olefinmonomeren polymerisiert wird.

5. Das Verfahren entsprechend Anspruch 4, wobei eine Mischung von Ethylen und Styrol polymerisiert wird.

## Revendications

1. Procédé pour préparer des polymères de styrène à l'aide d'une polymérisation du type coordination en mettant en contact un courant de monomère comprenant le styrène avec un catalyseur de coordination dans des conditions de polymérisation, de façon à réaliser une polymérisation au moins partielle du styrène, caractérisée par la mise en contact d'un courant de monomère comprenant le styrène et des quantités contaminantes de phénylacétylène avec un agent d'hydrogénation dans des conditions d'hydrogénation, en présence d'un catalyseur à base de métal noble ou d'un catalyseur à base de cuivre réduit à une température comprise entre 20°C et 45°C telles que sensiblement tout le phénylacétylène soit hydrogéné de sorte que la teneur en phénylacétylène dudit courant de monomère est de 0,9 ppm ou moins sans hydrogénation importante du styrène; puis par la mise en contact du courant de monomère avec le catalyseur de coordination.

2. Procédé selon la revendication 1, dans lequel l'agent d'hydrogénation est l'hydrogène.

3. Procédé selon l'une des revendications 1 ou 2, dans lequel la température est comprise entre 22°C et 30°C.

4. Procédé selon l'une des revendications 1 à 3, dans lequel un mélange de monomère styrénique et d'un ou plusieurs monomères oléfiniques autres que le styrène est polymérisé.

5. Procédé selon la revendication 4, dans lequel un mélange d'éthylène et de styrène est polymérisé.
